# EUROPEAN PATENT APPLICATION

(11) **EP 0 805 590 A2**
(43) Date of publication of application: **05.11.1997**
(21) Application number: 97107040.4
(22) Date of filing: 29.04.1997
(51) Int. Cl.: H04N 7/08

(54) **Broadcasting signal transmitting method and broadcasting signal receiving apparatus**

(30) Priority: 02.05.1996 JP 111677/96
(71) Applicant: MATSUSHITA ELECTRIC INDUSTRIAL CO., LTD., Kadoma-shi, Osaka 571 (JP)
(72) Inventor: Kubota, Masashi, Hyougoken Koubeshi (JP)
(74) Representative: Kügele, Bernhard

(57) **Abstract**

A method of transmitting broadcasting signals comprises multiplexing and transmitting a program including a video image, a sound and data, program relevant information related to the program, and first link information indicating a program broadcasted in the past and related to the program.

## Description

### FIELD OF THE INVENTION

The present invention relates to a method of transmitting broadcasting signals and an apparatus for receiving broadcasting signals transmitted using the method of transmitting broadcasting signals.

### BACKGROUND OF THE INVENTION

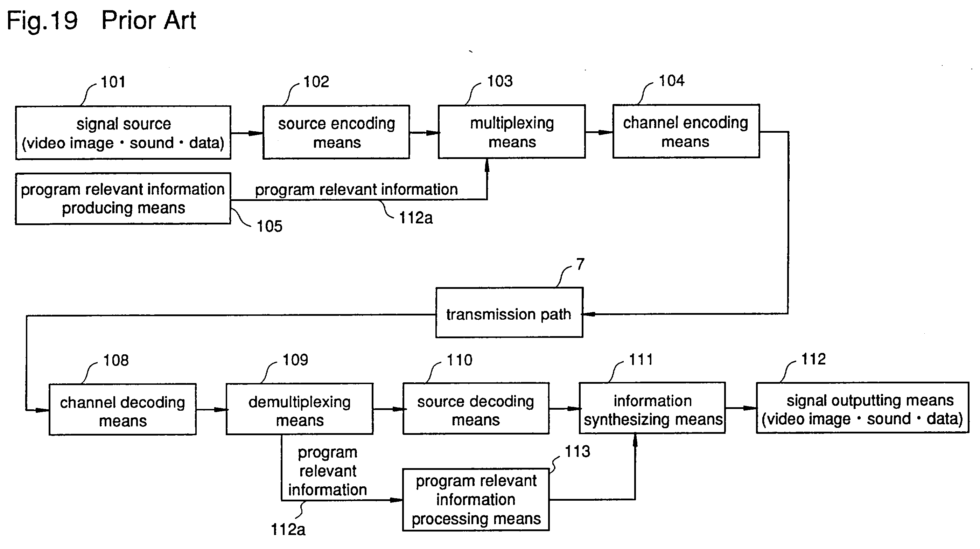

Figure 19 is a diagram illustrating a conventional system in which a digitalized video image, a sound and data are transmitted through a transmission path and subjected to digital to analog conversion, to be displayed. In the figure, reference numeral 101 designates a signal source including a video signal comprising a still picture or a motion picture, a sound signal and data. Reference numeral 102 designates a source encoding means for encoding the video signal or the sound signal according to an information source coding system in a MPEG standard, for example. Reference numeral 105 designates a program relevant information producing means for producing program relevant information 112a (such as type of a video image, a sound and data, constituting a program, program number or start time) i.e., information required to select a transmitted program. Generally, these information is produced based on standards of MPEG system standard manual (GENERIC CODING OF MOVING PICTURES AND ASSOCIATED AUDIO: SYSTEM Recommendation H.222.O, ISO/IEC 13818-1) and of DVB system standard manual (Digital Video Broadcasting (DVB) systems, ETS 300 468, January 1996) of a digital broadcasting standard in Europe. Reference numeral 103 designates a multiplexing means for multiplexing encoded signals and program relevant information. Reference numeral 104 designates a channel encoding means including an error correction encoding means for processing data as a protection against error in a transmission path and a digital modulating means for transmitting digital signals. Reference numeral 107 designates a transmission path comprising a transmitter, a transmission path and a tuner. Reference numeral 108 designates a channel decoding means comprising a digital decoding means for decoding digitally modulated signals and an error correcting means for a data error occurring in the transmission path 107. Reference numeral 109 designates a demultiplexing means for demultiplexing multiplexed digital signals output from the channel decoding means 108 into encoded signals and program relevant information. Reference numeral 110 designates a source decoding means for decoding signals encoded according to information source coding system defined in MPEG, for example, into video signals or sound signals. Reference numeral 113 designates a program relevant information processing means for selecting a program, producing a display screen for program select presentation processing, and synthesizing sound, using program relevant information required to select the program, which is input from the demultiplexing means 109. Reference numeral 111 designates an information synthesizing means for synthesizing video image and sound information which are output from the source decoding means 110 and program relevant information processing means 113, respectively. Reference numeral 112 designates a signal outputting means for outputting the video image, the sound and the data synthesized by the information synthesizing means 111.

The multiplexing means 103 may store scrambling function for scrambling signals and the demultiplexing means 109 may store descrambling function for returning scrambled signals to original ones.

A description is given of an operation of a prior art system.

Video signals consisting of still picture or a motion picture, sound signals and data from the signal source 101 are encoded according to information source coding system defined in MPEG by the source encoding means 102. Information required to select a program, such as a type of information constituting a program, program number, start time is produced by the program relevant information producing means 105. Signals output from the source encoding means 102 and the program relevant information producing means 105 are multiplexed by the multiplexing means 103. The multiplexing is performed according to MPEG system standard or DVB system standard as digital broadcasting standard in Europe. The multiplexed digital signals are processed by the channel encoding means 104 using the error correction encoding means for processing data as a protection against an error in a transmission path and a digital modulating means for transmitting digital signals and are transmitted through the transmission path 107 including a transmitter, a transmission path and a tuner in specific. The transmitted result is digitally decoded and error-corrected by the channel decoding mesas 108. The channel decoding means 108 outputs the same signal as the multiplexing means 103 by performing a procedure in reversed order of that in the channel encoding means 104. The separated signals are output to the source decoding means 110 and the program relevant information processing means 113, respectively. Information output to the source decoding means 110 is decoded into a video signal or a sound signal according to the MPEG standard, for example. The program relevant information processing means 113 selects a program, produces a display screen for performing a program select presentation processing and synthesizes sounds, using program relevant information required to select the program, based on the program relevant information demultiplexed by the demultiplexing means 109. The information synthesizing means 111 synthesizes information output from the source decoding means 110 and the program relevant information processing means 113. The video signal, the sound signal, and the data signal are output to a monitor, a speaker and a computer, respectively, for example, from the signal outputting means 112.

As described above, in the conventional method of transmitting broadcasting signals and apparatus for receiving broadcasting signals, the broadcasting signals can be transmitted and received in this system with respect to information which is broadcasted at present. However, relevant information as to a program broadcasted in the past related to a program to be broadcasted at present or relevant information as to a program which would be broadcasted and related to a program to be broadcasted at present is not transmitted. Therefore, a service using these relevant information cannot be provided, or such a service cannot be obtained.

### SUMMARY OF THE INVENTION

It is an object of the present invention to provide a method of transmitting broadcasting signals and an apparatus for receiving broadcasting signals which are transmitted by the method of transmitting broadcasting signals, in which a novel service can be provided using relevant information as to a program broadcasted in the past and related to a program which is broadcasted at present or relevant information as to a program which would be broadcasted in future and related to a program which is broadcasted at present, or such a service can be obtained and an apparatus for receiving broadcasting signals which are transmitted by the method for transmitting broadcasting signals.

Other objects and advantages of the invention will become apparent from the detailed description that follows. The detailed description and specific embodiments described are provided only for illustration since various additions and modifications within the spirit and scope of the invention will be apparent to those skilled in the art from the detailed description.

According to a first aspect of the present invention, a method of transmitting broadcasting signals comprises multiplexing and transmitting a program including a video image, a sound and data, program relevant information related to the program, and first link information indicating a program broadcasted in the past and related to the program. Therefore, a broadcasting system in which a service for presenting information as to a program which is being broadcasted at present or a program which would be broadcasted in future can be provided to the viewer in accordance with programs viewed by the viewer in the past in the receiving apparatus. In addition, programs provided by the transmission side can be viewed by many viewers by transmitting the first or second link information from the transmission side.

According to a second aspect of the present invention, a method of transmitting broadcasting signals comprises multiplexing and transmitting a program including a video image, a sound and data, program relevant information related to the program, and second link information indicating a program which would be broadcasted in future and related to a program which is being viewed at present and a relation between these programs. Therefore, a broadcasting system in which a service for presenting information as to a program which would be broadcasted in future can be provided to the viewer in accordance with a program which is being viewed by the viewer at present in the receiving apparatus. In addition, programs provided by the transmission side can be viewed by many viewers by transmitting the first or second link information from the transmission side.

According to a third aspect of the present invention, an apparatus for receiving broadcasting signals, the broadcasting signals comprising a program including a video image, a sound and data, program relevant information related to the program, and first link information indicating a program broadcasted in the past and related to the program being multiplexed to be transmitted, comprises a means for presenting viewable program information to the viewer on the basis of the first link information which has been transmitted with multiplexed and the past viewed program history of the receiving apparatus. Therefore, an apparatus for receiving broadcasting signals, the broadcasting signals comprising a program including a video image, a sound and data, program relevant information related to the program, and first link information indicating a program broadcasted in the past and related to the program being multiplexed to be transmitted, comprises a means for presenting viewable program information to the viewer on the basis of the first link information which has been transmitted with multiplexed and the past viewed program history of the receiving apparatus. Therefore, information as to a program which is being broadcasted at present or a program which would be broadcasted in future can be presented to the viewer in accordance with programs viewed by the viewer in the past in the receiving apparatus. As a result, the viewer does not fail to view a program which the viewer demands information as to a program which is being broadcasted at present or a program which would be broadcasted in future can be presented to the viewer in accordance with programs viewed by the viewer in the past in the receiving apparatus. As a result, the viewer does not fail to view a program which the viewer demands.

According to a fourth aspect of the present invention, an apparatus for receiving broadcasting signals, the broadcasting signals comprising a program including a video image, a sound and data, program relevant information related to the program, and second link information indicating a program which would be broadcasted in future and related to a program which is being viewed at present and a relation between these programs which have been multiplexed to be transmitted, comprises a means for presenting viewable program information to the viewer on the basis of the second link information which has been multiplexed to be transmitted. Therefore, information as to a program which would be broadcasted in future can be presented to the viewer in accordance with a program which is being viewed by the viewer at present in the receiving apparatus. As a result, the viewer can obtain information as to a program which the viewer demands.

According to a fifth aspect of the present invention, an apparatus for receiving broadcasting signals, the broadcasting signals comprising a program including a video image, a sound and data, program relevant information related to the program, and second link information indicating a program which would be broadcasted in future and related to a program which is being viewed at present and a relation between these two programs which have been multiplexed to be transmitted, comprises a means for presenting view reservable program information to the viewer on the basis of the second link information which has been transmitted with multiplexed and a means for performing view reserve. Therefore, information as to a program which would be broadcasted can be presented to the viewer in accordance with a program which is viewed at present by the viewer and the view reserve for that program can be performed in the receiving apparatus. As a result, the viewer can perform view reserve for a program which the viewer demands so as not to miss it.

According to a sixth aspect of the present invention, an apparatus for receiving broadcasting signals, the broadcasting signals comprising a program including a video image, a sound and data, program relevant information related to the program, and second link information indicating a program which would be broadcasted in future and related to a program which is being viewed at present and a relation between these two programs which have been multiplexed to be transmitted, comprises a means for presenting record reservable program information to the viewer on the basis of the second link information which has been multiplexed to be transmitted and a means for performing record reserve. Therefore, information as to a program which would be broadcasted in future can be presented to the viewer in accordance with a program which is being viewed by the viewer at present and record reserve for that program can be performed in the receiving apparatus. As a result, the viewer can perform record reserve of a program which the viewer demands so as not to miss it.

### BRIEF DESCRIPTION OF THE DRAWINGS

Figure 1 is a diagram illustrating a method of transmitting broadcasting signals and an apparatus for receiving broadcasting signals according to an embodiment 1.

Figure 2 is a diagram illustrating a descriptor of link information produced by a link information producing means 6.

Figure 3 is a diagram illustrating a descriptor of descriptors of link information illustrated in figure 2.

Figure 4 is a diagram illustrating a detailed construction of viewer information presenting means in the receiving apparatus according to the embodiment 1.

Figure 5 is a diagram illustrating an operation flow of the receiving apparatus according to the embodiment 1.

Figure 6(a) is a diagram illustrating video information produced based on an operation of the receiving apparatus and displayed on a screen of the receiving apparatus.

Figure 6(b) is a diagram illustrating an operation of displaying the video information in figure 6(a).

Figure 7 is a diagram illustrating a method of transmitting broadcasting signals and an apparatus for receiving broadcasting signals according to an embodiment 2.

Figure 8 is a diagram illustrating a detailed construction of the viewer information presenting means 14 in the apparatus for receiving broadcasting signals according to the embodiment 2.

Figure 9 is a diagram illustrating an operation flow in the apparatus for receiving broadcasting signals according to the embodiment 2.

Figure 10 is a diagram illustrating video information produced based on an operation of the receiving apparatus and displayed on a screen of the receiving apparatus.

Figure 11 is a diagram illustrating a method of transmitting broadcasting signals and the receiving apparatus according to an embodiment 3.

Figure 12 is a diagram illustrating a detailed construction of the viewer information presenting means 14 and the means for performing view reserve according to an embodiment 3.

Figure 13 is a diagram illustrating an operation of the receiving apparatus according to the embodiment 3.

Figure 14 is a diagram illustrating video information produced based on an operation of the receiving apparatus and displayed on a screen of the receiving apparatus.

Figure 15 is a diagram illustrating a method of transmitting broadcasting signals and the receiving apparatus according to an embodiment 4.

Figure 16 is a diagram illustrating a means for indicating viewer information 14 and a record reserving means 18 according to the embodiment 4.

Figure 17 is a diagram illustrating an operation of the receiving apparatus according to the embodiment 4.

Figure 18 is a diagram illustrating video information produced based on an operation of the receiving apparatus and displayed on a screen of the receiving apparatus.

Figure 19 is a diagram illustrating a prior art system in which a video image, digitalized sound and data are transmitted through a transmission path and subjected to digital-analog conversion to be displayed.

### DETAILED DESCRIPTION OF THE PREFERRED EMBODIMENTS

### [Embodiment 1]

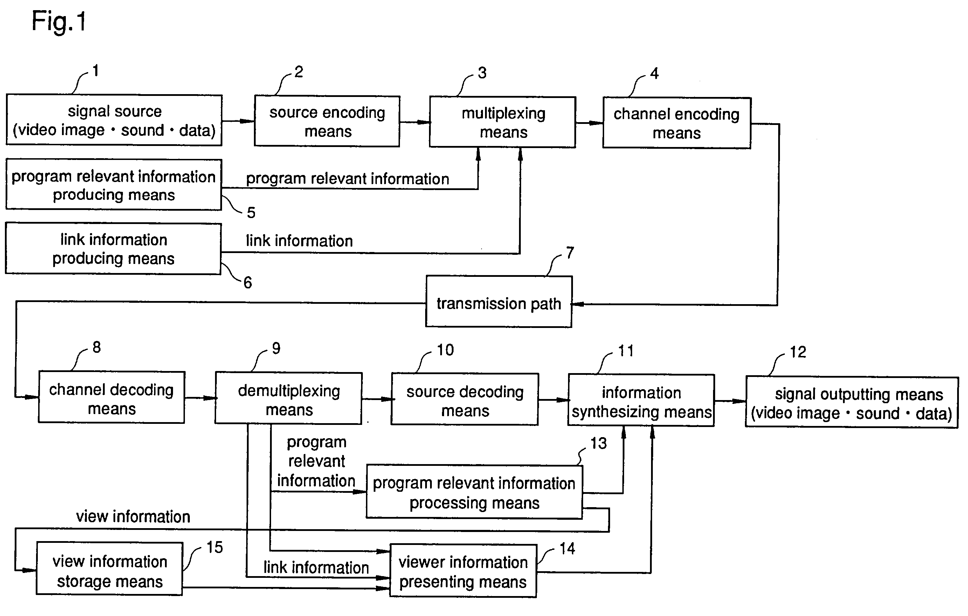

Figure 1 is a diagram illustrating a method of transmitting broadcasting signals and an apparatus for receiving broadcasting signals according to an embodiment 1. In the figure, reference numerals 1, 2, 3, 4 and 5 designate a signal source, a source encoding means, a multiplexing means, a channel encoding means and a program relevant information producing means, respectively. These are respectively identical to the signal source 101, the source encoding means 102, the multiplexing means 103, the channel encoding means 104 and the program relevant information producing means 105, respectively, in the prior art illustration in figure 19. The multiplexing means 3 is the one for multiplexing link information mentioned later in addition to encoded information and program relevant information. Reference numerals 7, 8, 9, 10, 11, 12, and 13 designate a transmission path, a channel decoding means, a demultiplexing means, a source decoding means, an information synthesizing means, a signal outputting means, and program relevant information processing means, respectively, and are identical to the transmission path 107, the channel decoding means 108, the demultiplexing means 109, the source decoding means 110, the information synthesizing means 111, the signal outputting means 112, and the program relevant information processing means 113, in the prior art illustration in figure 19. The demultiplexing means 9 demultiplexes encoded signals, program relevant information, and link information, from the multiplexed digital signals output from the channel decoding means 8.

Reference numeral 6 designates a link information producing means for producing link information with respect to a program to be transmitted. The link information to be transmitted in the embodiment 1 is the one indicating a relation to a program broadcasted in the past and, for example, consists of at least one ID among a network ID, a service ID and an event ID, and at least one among program starting time, date, a genre code, fee information or the like, which are required to specify one or a plurality of programs broadcasted in the past. Reference numeral 15 designates a view information storage means. The view information storage means 15 stores view information output from the program relevant information processing means 13, which view information is a program relevant information processed by a program which is selected by a user who performs the program selection using program relevant information and outputs the view information to a viewer information presenting means 14 in accordance with the demand from the viewer information presenting means 14 mentioned later. The viewer information presenting means 14 judges whether a program indicated by the link information has been viewed in the past or not, using information included in the link information output from the demultiplexing means 9 and view information including view history stored in the view information storage means 15. When the program has been viewed in the past, the viewer information presenting means 14 produces at least one of either a screen for presenting past program relevant program information or a sound for presenting past program relevant program information and outputs the same to an information synthesizing means 11.

Initially, a description is given of link information. Thereafter, after a detailed description is given of the viewer information presenting means characterized in the embodiment 1, an operation and a display example are described.

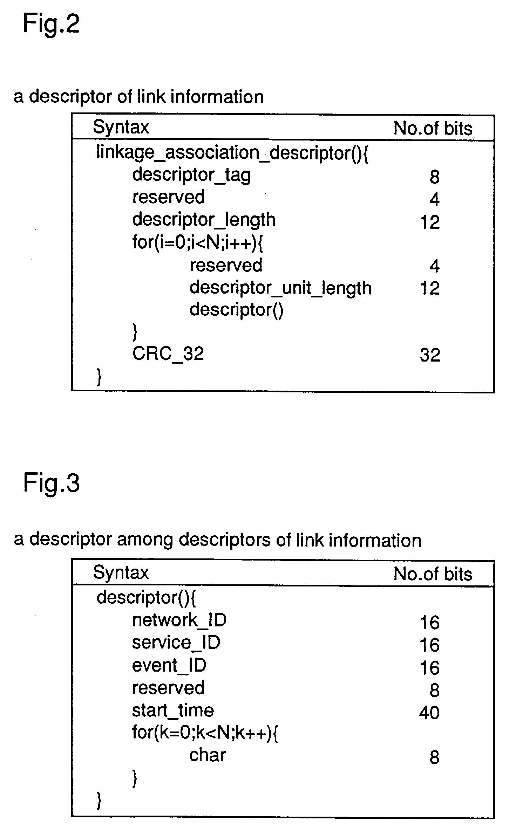

Figure 2 is a diagram illustrating a descriptor of link information produced by the link information producing means 6 in figure 1. In the descriptor of link information illustrated in figure 2, a descriptor tag is a code for identifying a descriptor and, is the one for indicating link information. Descriptor length indicates total length of the descriptor and descriptor unit length indicates length of the descriptor(). A plurality of sets of descriptor unit lengths and descriptors can be described. CRC 32 is information for detecting errors.

Figure 3 is a diagram illustrating a descriptor() among descriptors of link information illustrated in figure 2 and this descriptor describes what specific information the link information includes. In the figure, a network ID is information for identifying a network and indicates, for example, a satellite or a transponder in a transmission using the satellite. A service ID is service information or channel information and indicates a channel when a plurality of channels are present in a transponder. An event ID is a number indicating a program in a service. As the IDs described above, the IDs of the same definition as those written in the MPEG system standard or DVB system standard may be employed. Start time indicates start time information of a program. Char is arbitrary information of an arbitrary length and has information as to whether a program which would be broadcasted in future (or which was broadcasted in the past) is a continued one or a rebroadcasted one with respect to a program which is being viewed at present. Also, the char may include information which the user can define, among link information, for example, a genre code, fee information, series program information, characters information or the like. The descriptor() must include information required to specify a program in the past or the future.

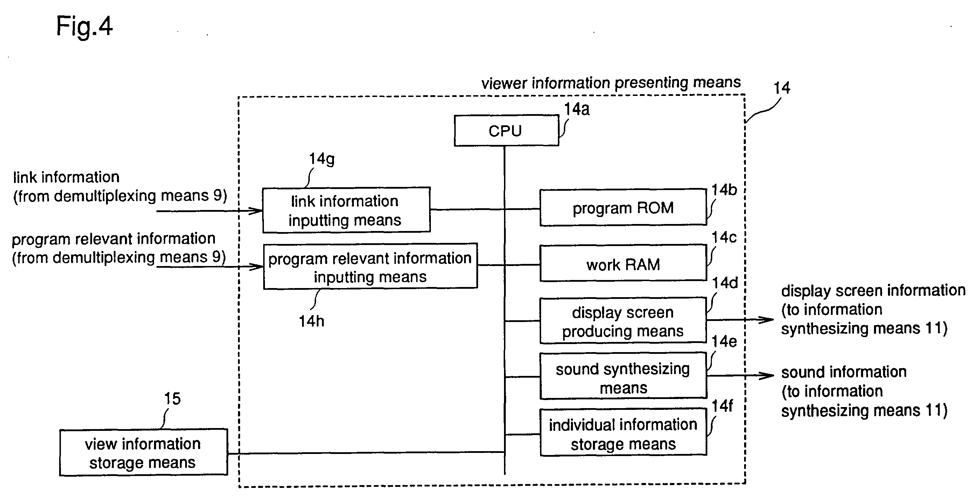

Figure 4 is a diagram illustrating a detailed construction of the viewer information presenting means 14 in the receiving apparatus in the embodiment 1. In the figure, a CPU (central processing unit) 14a controls the entire operation of the viewer information presenting means 14. A program memory 14b stores a program by which the CPU 14a performs control of respective means connected to the CPU 14a, such as control of writing, reading or retrieval of data, and generally comprises a ROM. A work memory 14c stores data temporarily when the CPU 14a performs operation control and generally comprises an RAM. A link information inputting means 14g is connected to the demultiplexing means 9 and inputs the link information from the demultiplexing means 9. A program relevant information inputting means 14h inputs the program relevant information from the demultiplexing means 9. A display screen producing means 14d produces display screen information for presenting program information on the screen to the viewer and outputs the same to the information synthesizing means 11. A sound synthesizing means 14e produces sound information for presenting program information by sound to the viewer and outputs the same to the information synthesizing means 11. An individual information storage means 14f stores information such as preference or taste of the viewer.

A description is given of the method of transmitting broadcasting signals and the apparatus for receiving broadcasting signals according to the embodiment 1, referring to figures 1 to 5. In figure 1, a signal source 1 comprises a video image, a sound and data, which are digitally encoded by the source encoding means 2. The program relevant information producing means 5 produces program relevant information with respect to the signal source 1 and the produced program relevant information is multiplexed with an output of the source encoding means 2 by the multiplexing means 3. These constructions are identical to that in the prior art.

A link information producing means 6 produces first link information with respect to the signal source 1. After the output of the source encoding means 2, the output of the program relevant information producing means 5, and the output of the link information producing means 6 are all multiplexed by the multiplexing means, the multiplexed outputs are channel-encoded by the channel encoding means 4 and then transmitted to the receiving apparatus through the transmission path 7. The received signals are channel-decoded by a channel decoding means 8 and among the resultant outputs, the video image, sound and data are output to the source decoding means 10, the program relevant information is output to the program relevant information processing means 13, and the program relevant information and the first link information are output to the viewer information presenting means 14. The information synthesizing means 11 synthesizes information outputs from the source decoding means 10, the program relevant information processing means 13, and the viewer information presenting means 14 and outputs the synthesized information to the signal outputting means 12.

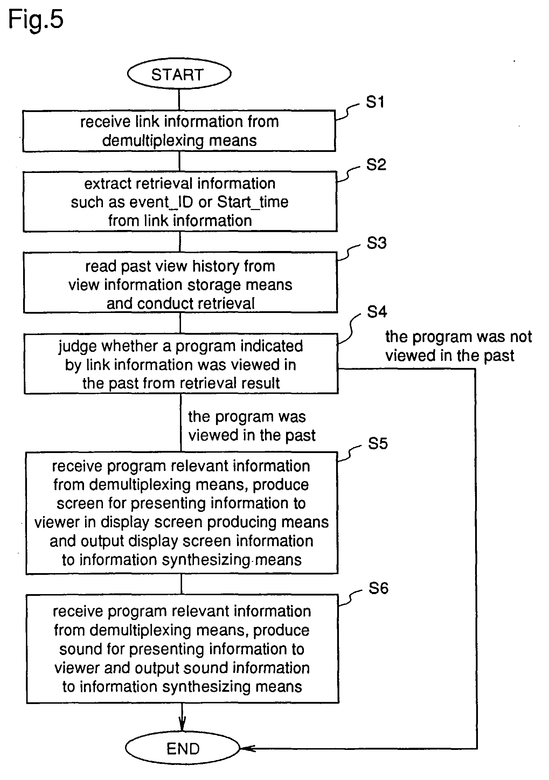

A description is given of an operation of the viewer information presenting means 14 with reference to figures 4 and 5. The viewer information presenting means 14 receives first link information through the link information inputting means 14g from the demultiplexing means 9 (step S1). The CPU 14a extracts retrieval information such as the event ID or start time from the received first link information (step S2). The CPU 14a reads past view history from the viewer information storage means 15 and conducts retrieval using the past retrieval information (step S3). The CPU 14a judges whether a program indicated by the first link information was viewed in the past or not, from the retrieval result (step 4). When the program was viewed in the past, the viewer information presenting means 14 receives the program relevant information through the program relevant information inputting means 14h from the demultiplexing means 9 and produces the screen for presenting the past program relevant program information to the viewer in the display screen producing means 14d and outputs the display screen information to the information synthesizing means 11 (step 5). Also, the viewer information presenting means 14 receives the program relevant information through the program relevant information inputting means 14h from the demultiplexing means 9 to produce the sound for presenting past program relevant program information to the viewer in the sound synthesizing means 14e, and outputs sound information to the information synthesizing means 11 (step S6). When it is judged that the program was not viewed in the past in step 4, the processing is completed.

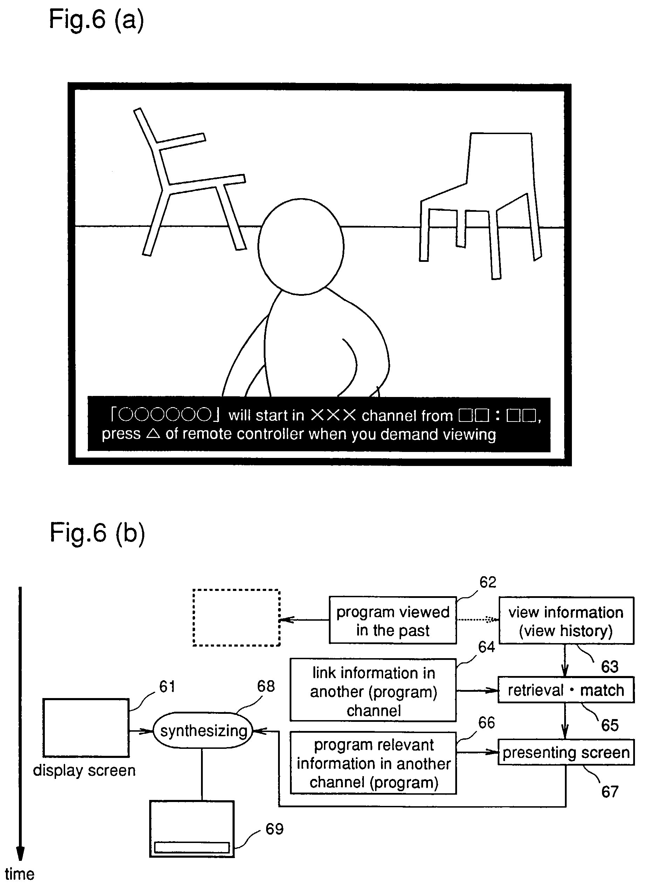

Figure 6(a) is a diagram illustrating video information produced based on the operation described above and displayed on the screen in the receiving apparatus. Figure 6(b) is a diagram illustrating an operation of displaying video information in figure 6(a) on the screen. A description is given of an operation of displaying program relevant information of a program related to a program viewed in the past referring to figure 6(b). In figure 6(b), the viewer cannot know about what program is broadcasted in another channel as long as the viewer watches the displayed screen. Hence, view information or view history 63 as to the program viewed in the past 62 is stored in the view information storage means 15 and the first link information 64 in another channel different from that on the display screen 61 is compared with the view information 63 to detect match between them (65). When retrieval results matches, the screen for presenting past program relevant program information or the sound for presenting past program relevant program information is produced using the program relevant information 66 of another channel (67) and are synthesized (68) with the display screen 61 to produce video image information 69 as illustrated in figure 6(a). This makes it possible for the viewer watching the display screen to know about what program is broadcasted through another channel, with no necessity of checking a program in another channel.

In the embodiment 1, program information is presented using past view information or history information stored in the view information storage means 15. Alternatively, program information to individual tastes using information as to individual preference or tastes stored in the individual information storage means 14f can be presented.

In this way, a method of transmitting broadcasting signals according to the embodiment 1 comprises multiplexing and transmitting a program including a video image, a sound and data, program relevant information related to the program, and first link information indicating a program broadcasted in the past and related to the program. Therefore, a broadcasting system in which a service for presenting information as to a program which is being broadcasted at present or a program which would be broadcasted in future can be provided to the viewer in accordance with programs viewed by the viewer in the past in the receiving apparatus. In addition, programs provided by the transmission side can be viewed by many viewers by transmitting the first or second link information from the transmission side.

Also, an apparatus for receiving broadcasting signals according to the embodiment 1, the broadcasting signals comprising a program including a video image, a sound and data, program relevant information related to the program, and first link information indicating a program broadcasted in the past and related to the program being multiplexed to be transmitted, comprises a means for presenting viewable program information to the viewer on the basis of the first link information which has been transmitted with multiplexed and the past viewed program history of the receiving apparatus. Therefore, information as to a program which is being broadcasted at present or a program which would be broadcasted in future can be presented to the viewer in accordance with programs viewed by the viewer in the past in the receiving apparatus. As a result, the viewer does not fail to view a program which the viewer demands

### [Embodiment 2]

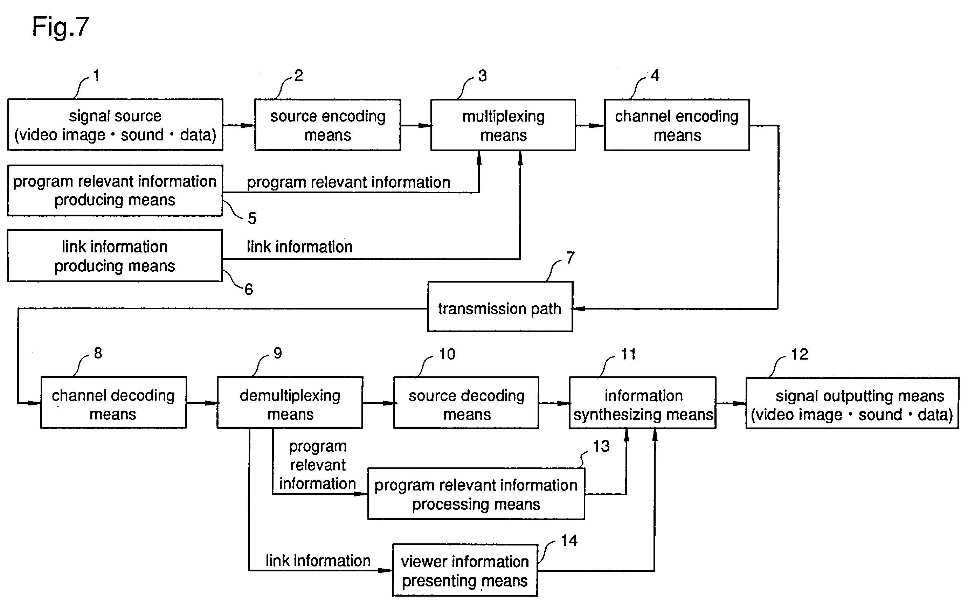

A description is given of an embodiment 2 referring to figures 7 to 10. Figure 7 is a diagram illustrating a method of transmitting broadcasting signals and the apparatus for receiving broadcasting signals according to the embodiment 2. In the figure, the same reference characters as those in figure 1 designate the same or corresponding parts.

In the method of transmitting broadcasting signals according to the embodiment 1, the link information produced by the link information producing means 6, multiplexed into a program and then transmitted is the one indicating a program which was broadcasted in the past related to a transmitted program (first link information). On the other hand, in the method of transmitting broadcasting signals according to the embodiment 2, link information produced by the link information producing means 6, multiplexed into a program and then transmitted is the one indicating a program which would be broadcasted in future and related to the program and a relation between these two programs and is the one (second link information) consisting of at least one ID among a network ID, a service ID and an event ID and at least one among a program start time, date, genre code, fee information or the like, which are required to specify one or a plurality of programs which would be broadcasted in future.

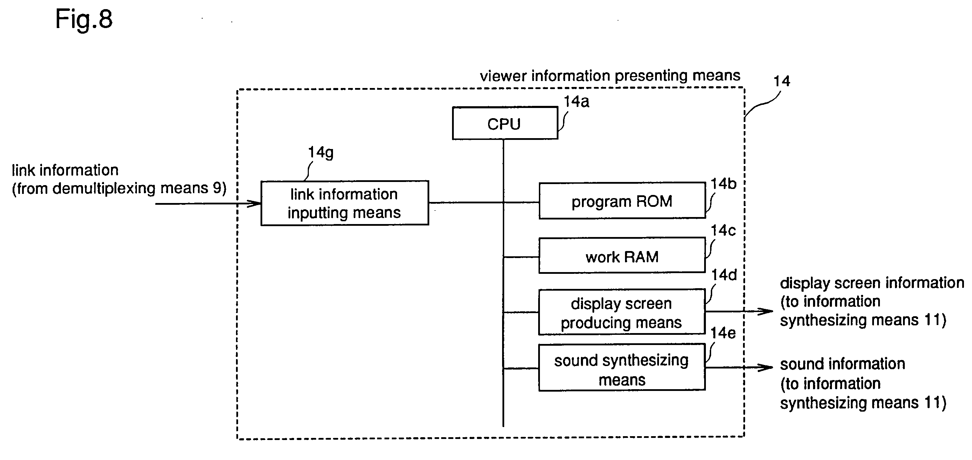

Figure 8 is a diagram illustrating a detailed construction of the viewer information presenting means 14. The same reference characters as those in figure 4 designates the same or the corresponding parts.

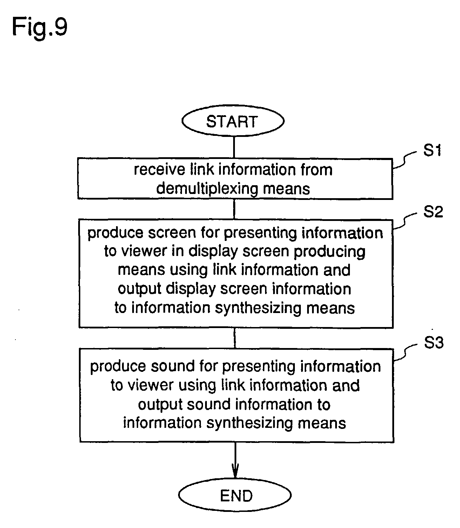

A description is given of an operation of the viewer information presenting means 14 according to the embodiment 2 in accordance with an operation flow illustrated in figure 9. In this embodiment 2, the CPU 14a receives second link information input from the demultiplexing means 9 through the link information inputting means 14g (step S1). The CPU 14a extracts information as to a program which would be broadcasted in future and related to a program being viewed now from second link information of a program a being viewed now, produces a screen for presenting future program information to the viewer in the display screen producing means 14d based on the information, and outputs display screen information to the information synthesizing means 11 (step S 2). Also, the CPU 14a produces a sound for presenting future program information to the viewer in the sound synthesizing means 14e and outputs sound information to the information synthesizing means 11 (step S3). For example, the second link information includes information as to when and in what channel a program to be continued with respect to a program being broadcasted at present will be broadcasted to present the same to the viewer. Information as to rebroadcasting of the program can be obtained from second link information.

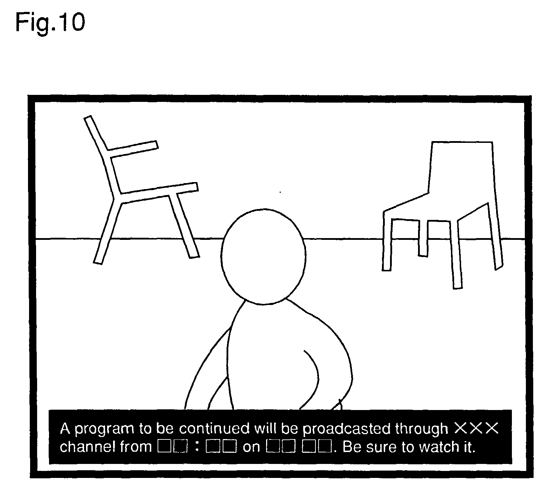

Figure 10 is a diagram illustrating video information produced based on the operation described above and displayed on the screen of the receiving device. Thus, the viewer watching the display screen now can know about information as to when a program to be continued will be broadcasted, or the like.

In the method of transmitting broadcasting signals according to the embodiment 2, a program including a video image, a sound and data, program relevant information related to the program, and second link information indicating a program which would be broadcasted in future and related to a program being viewed at present and a relation between these two programs are multiplexed to be transmitted. Therefore, a broadcasting system which can provide a service for the viewer, for presenting information as to a program which would be broadcasted in the receiving apparatus according to a program being viewed at present by the viewer.

Also, the apparatus for receiving broadcasting signals according to the embodiment 2, the broadcasting signals comprising a program including a video image, a sound and data, program relevant information related to the program, and second link information indicating a program which would be broadcasted in future and related to a program which is being viewed at present and a relation between these programs which have been multiplexed to be transmitted, comprises a means for presenting viewable program information to the viewer on the basis of the second link information which has been multiplexed to be transmitted. Therefore, information as to a program which would be broadcasted in future can be presented to the viewer in accordance with a program which is being viewed by the viewer at present in the receiving apparatus.

### [Embodiment 3]

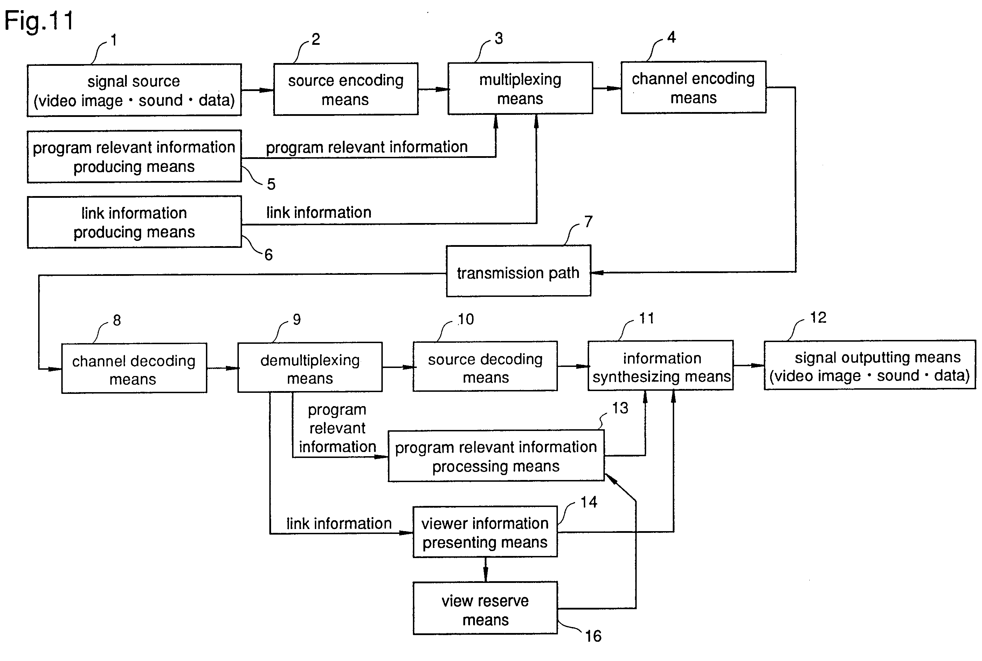

A description is given of a third embodiment 3 of the present invention referring to figure 11 to 14. Figure 11 is a diagram illustrating a method of transmitting broadcasting signals and an apparatus for receiving broadcasting signals. In the figure, the same reference characters as those in figure 1 designate the same or corresponding parts. Reference numeral 16 designates a means for performing view reserve based on an output of the viewer information presenting means 14 and the output is input to a program relevant information processing means 13.

In the method of transmitting broadcasting signals according to the embodiment 3, link information produced by the link information producing means 6, multiplexed into a program and then transmitted indicates a program which would be broadcasted and related to the program and a relation between these programs and is the one (second link information) consisting of at least one ID among a network ID, a service ID and an event ID and at least one of a program start time, date, genre code, fee information, series program information, characters information or the like, which are required to specify one or a plurality of programs which would be broadcasted in future.

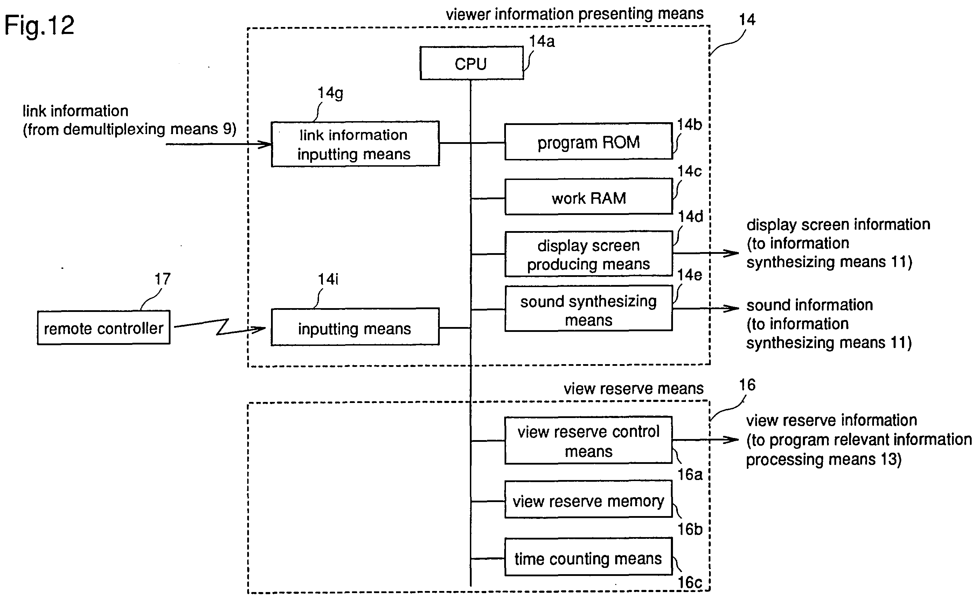

Figure 12 is a diagram illustrating detailed constructions of the viewer information presenting means 14 and the view reserve means 16. The same reference characters as those in figure 4 designate the same or corresponding parts. In the figure, an inputting means 14i is the one with which the CPU 14a knows about information which the viewer keys in a remote controller 17. The view reserve means 16 is the one for performing view reserve based on view reserve information from the viewer information presenting means 14 and comprises a view reserve control means 16a, a view reserve memory 16b, and a time counting means 16c. The view reserve control means 16a comprises a means for storing view reserve information in the view reserve memory 16b when receiving view reserve in the view reserve means 16, a means for informing the view reserve of the program relevant information processing means 13 as view reserve information, and a means for informing view reserve information of the program relevant information processing means 13 to start viewing when program start information included in the view reserve information which has been read from the view reserve memory 16b is compared with time information from the time counting means 16c mentioned later and a match is found between them, and to complete viewing when a program completion time of view reserve information or program completion time computed by adding program start information to program time is compared with time information from the time counting means 16c and a match is found between them. The view reserve memory 16b is the one for storing the view reserve information temporarily. The time counting means 16c is the one for counting a present time.

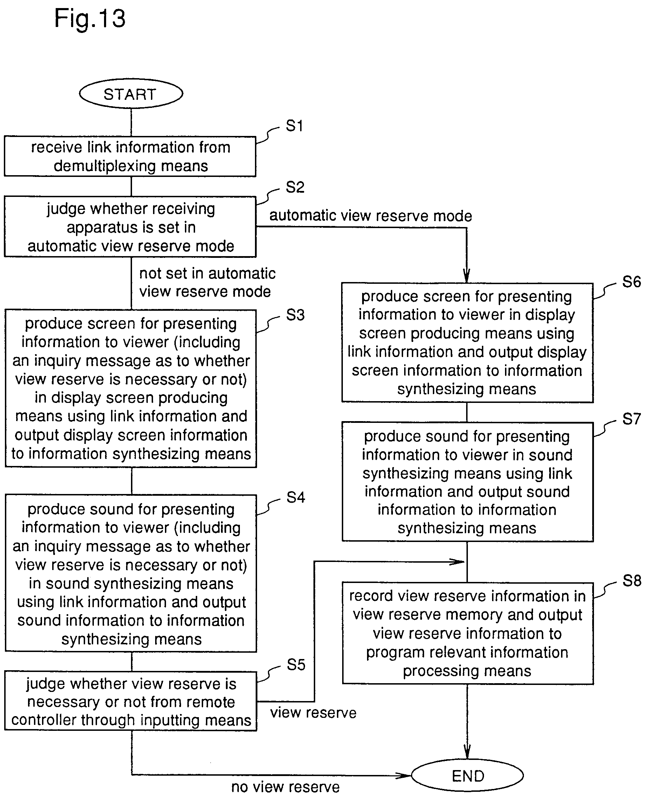

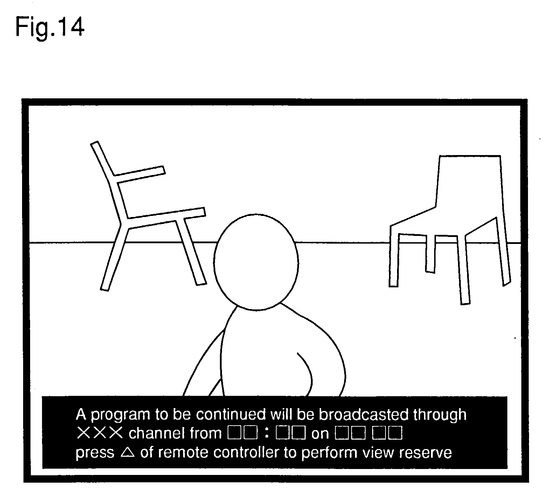

A description is given of an operation of the receiving apparatus according to the embodiment 3 constructed described above in accordance with an operation flow diagram in figure 13. The CPU 14a receives second link information input from the demultiplexing means 9 through the link information inputting means 14g (step S 1). The CPU 14a judges whether the receiving apparatus is set in the automatic view reserve mode or not (Step S2). When the receiving apparatus is not set in the automatic view reserve mode, the display screen producing means 14d produces a message including an inquiry as to whether view reserve is necessary or not for the viewer as an information presenting screen using second link information of a program being viewed now and outputs display screen information to the information synthesizing means 11 (Step 3). The sound synthesizing means 14e produces information presenting sound including an inquiry message as to whether view reserve for the viewer is necessary or not using the link information and outputs the same to the sound information synthesizing means 11 (Step S4). Figure 14 illustrates video image information displayed on the screen at this time. Thereafter, the CPU 14a inputs a signal from the remote controller 17 operated by the viewer through the inputting means 14i and judges whether the viewer will perform view reserve or not (Step S5). When the viewer performs view reserve, the CPU 14a transmits view reserve information to the view reserve means 16 (Step S8). The view reserve means 16 records view reserve information in the view reserve memory 16b using view reserve information received from the CPU 14a and outputs the view reserve information to the program relevant information processing means 13. The view reserve control means 16 has a capability of informing view reserve information of the program relevant information processing means 13, to start viewing when time information from the time counting means 16c is compared with program start time information of view reserve information stored in the view reserve memory 16c and a match is found, and to complete viewing when program completion time information of view reserve information or program completion time computed by adding view start time information to program start information is compared with time information from the time counting means 16c and a match is found, as well as a capability of receiving view reserve. In figure 13, flow of operation of the receiving apparatus which is not in the automatic view reserve mode has been described. However, when the receiving apparatus is in the automatic reserve mode, the view reserve means 16 presents information indicating automatic view reserve. (Step S6, Step S7) and automatically performs view reserve without making an inquiry as to whether the view reserve for the viewer is necessary or not. That is, when the receiving apparatus is set in the automatic view reserve mode, the view reserve means 16 performs view reserve by the CPU 14a's outputting the view reserve information to the view reserve means 16 with no necessity of an answer from the remote controller 17 as to whether the view reserve is necessary or not. The automatic view reserve mode is preset by the CPU 14a.

In this way, the apparatus for receiving broadcasting signals according to the embodiment 3, the broadcasting signals comprising a program including a video image, a sound and data, program relevant information related to the program, and second link information indicating a program which would be broadcasted in future and related to a program which is being viewed at present and a relation between these programs which have been multiplexed to be transmitted, comprises a means for presenting viewable program information to the viewer on the basis of the second link information which has been multiplexed to be transmitted. Therefore, information as to a program which would be broadcasted in future can be presented to the viewer in accordance with a program which is being viewed by the viewer at present in the receiving apparatus. As a result, the viewer can obtain information as to a program which the viewer demands.

### [Embodiment 4]

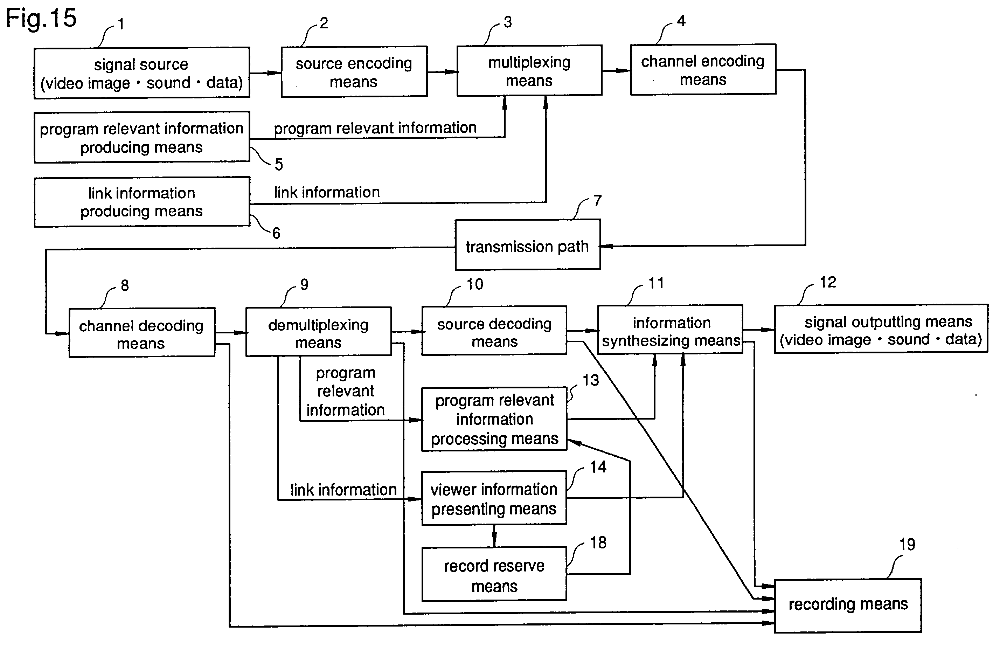

A description is given of an embodiment 4 by figures 15 to 18.

Figure 15 is a diagram illustrating a method of transmitting broadcasting signals and an apparatus for receiving broadcasting signals according to the embodiment 4. In the figure, the same reference characters as those in figure 1 designate the same or corresponding parts. Reference numeral 18 designates a record reserve means for performing record reserve based on an output of the viewer information presenting means 14. Reference numeral 19 designates a recording means for recording based on an output of the record reserve means 18.

In the method of transmitting broadcasting signals according to the embodiment 4, link information produced by the link information producing means 6, multiplexed into a program and then transmitted indicates a program which would be broadcasted and related to the program and a relation between these programs and is the one (second link information) consisting of at least one ID of a network ID, a service ID and an event ID, and at least one of a program start time, date, a genre code, fee information, series program information, character information or the like, which are required to specify one or a plurality of programs which would be broadcasted in future.

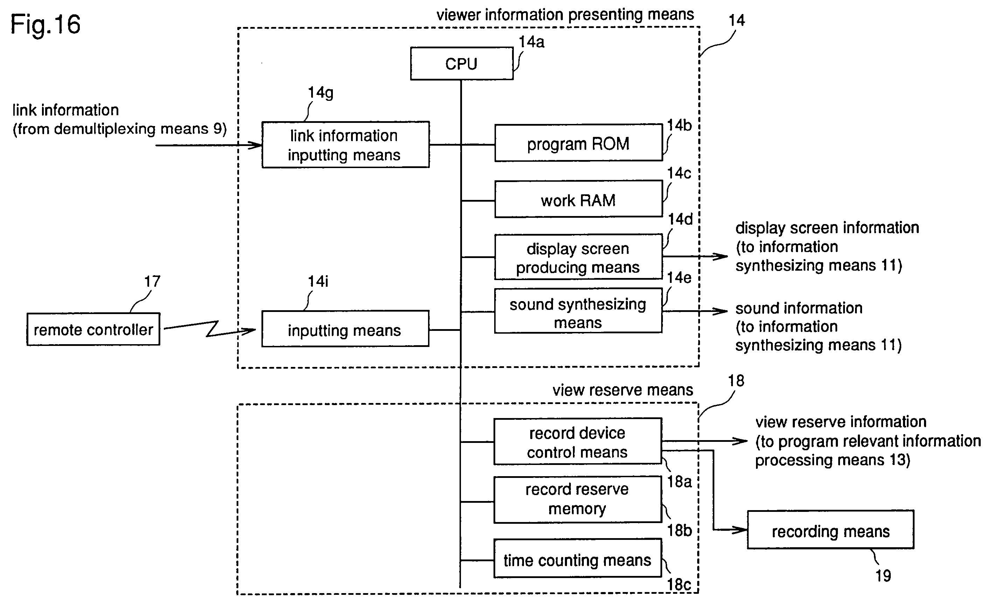

Figure 16 is a diagram illustrating detailed constructions of the viewer information presenting means 14 and the record reserve means 18. In the figure, the same reference characters as those in figure 12 designate the same or corresponding parts. The record reserve means 18 performs record reserve based on the record reserve information from the means for the viewer information presenting means 14 and executes record control of the recording means 19. The record reserve means 18 comprises a record device control means 18a, a record reserve memory 18b and a time counting means 18c. The record device control means 18a comprises a means for storing record reserve information in the record reserve memory 18b on receipt of the record reserve, a means for informing record reserve of the program relevant information processing means 13 as record reserve information and a means for controlling the record means 19, to start recording when program start time information included in record reserve information which has been read from the record reserve memory 18b is compared with time information from the time counting means 18c, and to complete recording when program completion time information of the record reserve information or program completion time computed by adding program start time information to program time is compared with time information from the time counting means 18c and a match is found between them and simultaneously for informing the program relevant information processing means 13 that the record means is recording as record reserve information. The record reserve memory 18b is the one for storing the record reserve information temporarily. The time counting means 18c is the one for counting a present time and has the same capability as the aforementioned time counting means 16c. The record means 19 is connected to the record reserve means 18 directly or through transmitter/receiver using an infrared and is the one for recording digital signals output from the channel decoding means 8 or the demultiplexing means 9, or digital signals or analog signals output from the source decoding means 10 or the information synthesizing means 11.

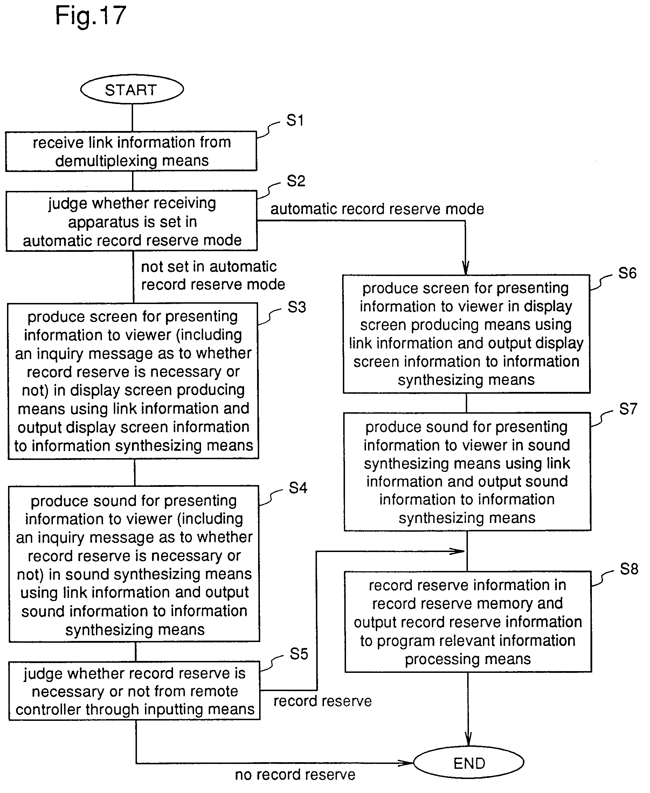

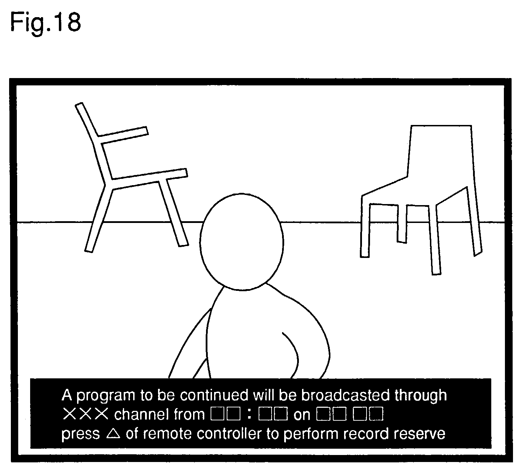

A description is given of an operation of the receiving apparatus according to the embodiment 4 constructed described above in accordance with an operation flow diagram in figure 17. The CPU 14a receives second link information input from the demultiplexing means 9 through the link information inputting means 14g (step S1). The CPU 14a judges whether the receiving apparatus is set in the automatic record reserve mode or not (Step S2). When the receiving apparatus is not in the automatic record reserve mode, the display screen producing means 14d produces a message including an inquiry as to record reserve for the viewer is necessary or not as an information presenting screen using the second link information of a program being viewed and outputs display screen information to the information synthesizing means 11 (Step 3). The sound synthesizing means 14e produces information presenting sound including an inquiry message as to whether record reserve for the viewer is necessary or not using the link information and outputs the same to the sound information synthesizing means 11 (Step S4). Figure 18 illustrates video image information displayed on the screen at this time. Thereafter, the CPU 14a inputs a signal from the remote controller 17 operated by the viewer through the inputting means 14i and judges whether the viewer will perform record reserve or not (Step S5). When the viewer performs record reserve, the CPU 14a transmits record reserve information to the record reserve means 18 (Step S8). The record reserve means 18 records record reserve information in a record reserve memory 18b using record reserve information received from the CPU 14a and outputs the record reserve information to the program relevant information processing means 13. The record reserve control means 18 has a capability of controlling the record means 19 to start recording when time information from the time counting means 18c is compared with program start time information of record reserve information stored in the record reserve memory 18b and a match is found, and to complete recording when program completion time information of record reserve information stored in the record reserve memory 18b or program completion time computed by adding program start time information to program time information is compared with time information from the time counting means 18c and a match is found between them, and informing the program relevant information processing means 13 that the record means is recording as the record reserve information as well as a capability of receiving record reserve. In figure 17, flow of operation of the receiving apparatus which is not in the automatic record reserve mode has been described. However, when the receiving apparatus is in the automatic record reserve mode, the record reserve means 16 presents information indicating automatic record reserve (Step S6, Step S7) and automatically performs record reserve without making an inquiry as to whether the record reserve for the viewer is necessary or not. That is, when the receiving apparatus is set in the automatic record reserve mode, the record reserve means 18 performs record reserve by the CPU 14a's outputting the record reserve information to the record reserve means 18 with no necessity of an answer from the remote controller 17 as to whether the record reserve is necessary or not. The automatic record reserve mode is preset by the CPU 14a.

Thus, an apparatus for receiving broadcasting signals according to the embodiment 4, the broadcasting signals comprising a program including a video image, a sound and data, program relevant information related to the program, and second link information indicating a program which would be broadcasted in future and related to a program which is being viewed at present and a relation between these two programs which have been multiplexed to be transmitted, comprises a means for presenting record reservable program information to the viewer on the basis of the second link information which has been multiplexed to be transmitted and a means for performing record reserve. Therefore, information as to a program which would be broadcasted in future can be presented to the viewer in accordance with a program which is being viewed by the viewer at present and record reserve for that program can be performed in the receiving apparatus. As a result, the viewer can perform record reserve of a program which the viewer demands so as not to miss it.

## Claims

1. A method of transmitting broadcasting signals comprising:
multiplexing and transmitting a program including a video image, a sound and data, program relevant information related to the program, and first link information indicating a program broadcasted in the past and related to the program.

2. A method of transmitting broadcasting signals comprising:
multiplexing and transmitting a program including a video image, a sound and data, program relevant information related to the program, and second link information indicating a program which would be broadcasted in future and related to a program which is being viewed at present and a relation between these programs.

3. An apparatus for receiving broadcasting signals which receives broadcasting signals, the broadcasting signals comprising a program including a video image, a sound and data, program relevant information related to the program, and first link information indicating a program broadcasted in the past and related to the program being multiplexed to be transmitted, comprising:
a means for presenting viewable program information to the viewer on the basis of the first link information which has been transmitted with multiplexed and the past viewed program history of the receiving apparatus.

4. An apparatus for receiving broadcasting signals which receives broadcasting signals, the broadcasting signals comprising a program including a video image, a sound and data, program relevant information related to the program, and second link information indicating a program which would be broadcasted in future and related to a program which is being viewed at present and a relation between these programs which have been multiplexed to be transmitted, comprising:
a means for presenting viewable program information to the viewer on the basis of the second link information which has been multiplexed to be transmitted.

5. An apparatus for receiving broadcasting signal which receives broadcasting signals, the broadcasting signals comprising a program including a video image, a sound and data, program relevant information related to the program, and second link information indicating a program which would be broadcasted in future and related to a program which is being viewed at present and a relation between these two programs which have been multiplexed to be transmitted, comprising:
a means for presenting view reservable program information to the viewer on the basis of the second link information which has been transmitted with multiplexed and a means for performing view reserve.

6. An apparatus for receiving broadcasting signals which receives broadcasting signals, the broadcasting signals comprising a program including a video image, a sound and data, program relevant information related to the program, and second link information indicating a program which would be broadcasted in future and related to a program which is being viewed at present and a relation between these two programs which have been multiplexed to be transmitted, comprising:
a means for presenting record reservable program information to the viewer on the basis of the second link information which has been multiplexed to be transmitted and a means for performing record reserve.
